# EUROPÄISCHE PATENTSCHRIFT

(11) **EP 2 295 182 B1**
(45) Veröffentlichungstag und Bekanntmachung des Hinweises auf die Patenterteilung: **06.12.2017**
(21) Anmeldenummer: 10175999.1
(22) Anmeldetag: 09.09.2010
(51) Int. Cl.: B23K 1/00, B23K 1/005, B23P 15/26, B23K 101/14

(54) **Lötverfahren für Wärmetauscher**
Soldering method for heat exchangers
Procédé de soudure pour échangeurs thermiques

(30) Priorität: 11.09.2009 DE 102009043985
(43) Veröffentlichungstag der Anmeldung: 16.03.2011
(73) Patentinhaber: Hydro Aluminium Rolled Products GmbH, 41515 Grevenbroich (DE)
(72) Erfinder: Siemen, Andreas, 41363 Jüchen (DE); Denkmann, Volker, 47906 Kempen (DE); Schenkel, Willi, 41515 Grevenbroich (DE); Hampel, Ulrich, 41516 Grevenbroich (DE)
(74) Vertreter: Cohausz & Florack

(56) Entgegenhaltungen:
- EP-A1- 1 302 268
- WO-A1-91/04824
- DE-A1- 19 716 757
- JP-A- 2004 358 484
- US-A1- 2002 139 781
- US-A1- 2005 091 820
- US-A1- 2006 186 176
- Pooja Bhagwan: "A Handbook of Chemical Analysis" In: "A Handbook of Chemical Analysis", 31 December 2005 (2005-12-31), International Scientific Publishing Academy, India, XP055062808, ISBN: 978-8-18-293008-7 page 87, * page 87 *

## Beschreibung

Die Erfindung betrifft ein Verfahren zum Löten von Wärmetauschern, welche zumindest teilweise aus Aluminium oder einer Aluminiumlegierung bestehen.

Bauteile aus Aluminium oder Aluminiumlegierungen, welche durch ein Lötverfahren hergestellt werden, sind beispielsweise Wärmetauscher oder auch Absorbermodule eines Solarkollektors. Daneben gibt es zahlreiche andere Produkte aus Aluminium oder einer Aluminiumlegierung, deren stoffschlüssige Verbindungen durch Löten bereitgestellt werden. Wärmetauscher oder Absorbermodule eines Solarkollektors umfassen eine Vielzahl von Lötstellen, welche üblicherweise durch ein Vakuumlöten oder ein Löten in kontrollierter Atmosphäre (Controlled Atmosphere Brazing - CAB) gelötet werden. Beim CAB-Löten wird üblicherweise ein Flussmittel verwendet. Sowohl beim Vakuumlöten als auch beim CAB-Löten werden die Bauteile zuvor entweder unter Luftatmosphäre oder in einer Inertgasatmosphäre vorgeheizt. Dieser Prozess dauert etwa 10 bis 15 Minuten. Da die gesamte Inertgasatmosphäre oder Luftatmosphäre erhitzt werden muss, welche dann das Bauteil erhitzt, ist dieser Prozess auch relativ energieintensiv. Insbesondere ist die gesamte Prozesszeit für den Lötvorgang mit 10 bis 15 Minuten sehr lang und ermöglicht keine hohen Ausbringungsraten einer Lötstraße für Wärmetauscher oder auch Absorbermodule von Solarkollektoren.

Ein Verfahren zum Löten von zwei Metallteilen ist bereits aus der EP 1 302 268 A1 bekannt. Gemäß dem in diesem Dokument offenbarten Verfahren wird das Lot direkt oder indirekt durch den Einsatz einer Infrarot-Strahlungsquelle verflüssigt und kann so die beiden Metallteile nach dem Abkühlen miteinander verbinden. Bei einer direkten Verflüssigung wirkt die Strahlungsquelle unmittelbar auf das Lot, bei einer indirekten Verfahrensweise wird das Lot von einem Metallteil, welches der Infrarot-Strahlungsquelle ausgesetzt ist, mittelbar geheizt. Die zur Erwärmung verwendeten Wellenlängen liegen in einem Bereich zwischen 2 und 10 µm.

Das Verfahren weist jedoch Mängel bezüglich der Erwärmung von Metallen mit hohem Reflektionskoeffizienten, wie beispielsweise Kupfer mit einem Reflektionskoeffizienten im IR-Spektralbereich zwischen 80 und 95% auf. Lediglich unter Anwendung einer Absorberbeschichtung, die im IR-Bereich gut absorbiert, kann eine Kupferplatte ausreichend effektiv erwärmt werden.

Aus der US 2002/0139781 A1 ist ein Verfahren zum Löten von Metallteilen bekannt, bei dem Infrarot-Strahlung mit Hilfe von Reflektoren konzentriert auf das zwischen den Metallteilen angeordnete Lot geleitet wird, um das Lot zu erhitzen und die Metalle nach dem Erkalten des Lotes miteinander zu fügen.

Die WO 91/04824 offenbart ein Verfahren zum Löten von Bauelementen für die Oberflächenbestückung von Platinen, wobei die Platinen keine Durchgangslöcher aufweisen, mittels einer Kombination aus einem Konvektionslöten und einer Erwärmung durch eine Infrarot-Strahlungsquelle.

Schließlich ist aus der DE 197 16 757 A1 ein Verfahren zur berührungslosen örtlich begrenzten Erwärmung von Material mit Hilfe von gebündelter Strahlung bekannt. Dabei wird gezielt die Lötstelle erwärmt, die Erwärmung der umliegenden Bereiche der Lötstelle ist aufgrund eines kühlenden Luftstroms ausgeschlossen.

Aus der JP 2004358484, die dem Oberbegriff von Anspruch 1 zugrundeliegt, ist ein Verfahren zum Löten von Wärmetauschern aus Aluminium oder Kupfer bekannt, bei welchem NIR-Strahlung verwendet werden soll.

Die vorliegende Erfindung hat sich deshalb zur Aufgabe gemacht, ein verbessertes Lötverfahren für Wärmetauscher aus Aluminium oder einer Aluminiumlegierung zur Verfügung zu stellen, mit welchem deutlich kürzere Taktzeiten erreicht werden können.

Gemäß der vorliegenden Erfindung wird die aufgezeigte Aufgabe mit einem Verfahren mit den Merkmalen des Patentanspruches 1 gelöst.

Die NIR-Strahlungsquelle hat deutliche Vorteile gegenüber den konventionell verwendeten konvektiven Wärmequellen, denn die NIR-Strahlungsquellen erwärmen die Bauteile durch Absorbieren der Wärmestrahlung im Metall selbst. Auch Bauteile, welche wie beim Vakuumlöten nicht von einer Atmosphäre umgeben sind, können sehr effektiv erwärmt werden. Im Vergleich zu üblichen Infrarotstrahlungsquellen ist der Wärmeeintrag der NIR-Strahlungsquelle deutlich vergrößert, da die emittierten Photonen aufgrund ihrer geringeren Wellenlänge deutlich mehr Energie im absorbierenden Medium abgeben. NIR-Strahlungsquellen besitzen im Wellenlängenbereich von 800 nm bis 1500 nm ihr Intensitätsmaximum und werden häufig durch speziell gewickelte Halogenstrahler realisiert. Beim Löten von Wärmetauschern aus Aluminium oder einer Aluminiumlegierung hat es sich gezeigt, dass diese Strahlungsquellen das Aluminiumbauteil sehr effektiv erhitzen können, so dass das verwendete Aluminiumlot, welches entweder durch einen Verbundwerkstoff mit einer Aluminiumlotschicht oder durch eine Lötfolie bereitgestellt wird, innerhalb kürzester Zeit aufschmilzt und damit nach Abkühlung eine stoffschlüssige Lötverbindung erzeugt wird. Die Zykluszeiten der konventionellen Lötstraßen werden um den Faktor 5 bis 10 verringert. Grundsätzlich ist das erfindungsgemäße Lötverfahren aufgrund der unmittelbaren Erwärmung der Bauteile durch die NIR-Strahlung sehr energiesparsam.

Gemäß einer ersten Ausgestaltung des erfindungsgemäßen Verfahrens wird mindestens eine im Inneren der Bauteile angeordnete Lötstelle gelötet. Die Erwärmung der Bauteile unter Verwendung der NIR-Strahlungsquelle zeigt vor allem aufgrund der guten Wärmeleitung von Aluminium sehr gute Lötergebnisse auch bei der Herstellung von Lötstellen, welche im Inneren der Bauteile liegen. Die Erwärmung durch die NIR-Strahlungsquellen ist so effektiv, dass innerhalb weniger Sekunden die vorhandene Aluminiumlotschicht, die verwendete Lötfolie oder Lötpaste auf eine Temperatur oberhalb der Solidustemperatur der entsprechenden Aluminiumlegierung gebracht wird, das Lot aufschmilzt und eine Lötverbindung erzeugt wird.

Werden die Bauteile erfindungsgemäß unter Verwendung mindestens einer NIR-Strahlungsquelle vakuum-gelötet, können die hierzu verwendeten Öfen oder evakuierbare Lötlehren gut an die Abmessungen der zu lötenden Bauteile und vor allem mit minimalem Volumen verwendet werden. Ein Lötofen mit einem verringerten Volumen benötigt beispielsweise beim CAB-Lötverfahren deutlich weniger Inertgas und kann daher deutlich günstiger betrieben werden. Durch die Verringerung der Volumina der evakuierbaren Lötlehren ergibt sich ebenfalls der Vorteil, dass die Evakuierung kostengünstiger ist und das gesamte Handling der Lötlehren deutlich erleichtert wird. Beides führt zu einer Verringerung der Kosten.

Je nach Geometrie der Bauteile ist es vorteilhaft, wenn diese ein- oder mehrseitig unter Verwendung mindestens einer NIR-Strahlungsquelle erwärmt werden. Zwar hat Aluminium oder eine Aluminiumlegierung eine sehr gute Wärmeleitung, die beidseitige Erwärmung ergibt sehr kurze Aufheizphasen bis zur Löttemperatur. Es ist bei dieser Ausgestaltung des erfindungsgemäßen Verfahrens möglich, ein Bauteil unter Verwendung einer einzigen NIR-Strahlungsquelle mehrseitig zu erwärmen. Hierzu können beispielsweise Reflektoren oder Lichtleitfasern verwendet werden, um die NIR-Strahlung an das Bauteil zu führen. Selbstverständlich können auch zwei NIR-Strahlungsquellen verwendet werden, um das Bauteil von zwei Seiten zu erwärmen.

Gemäß einer weiteren Ausführungsform des erfindungsgemäßen Verfahrens kann der Energiebedarf des Lötverfahrens dadurch gesenkt werden, dass die NIR-Strahlungsquelle nur zur Erwärmung des zu lötenden Bauteils eingeschaltet ist. Da der Energieübertrag auf das zu lötenden Bauteil durch die NIR-Strahlung erfolgt, ist keine Aufheizphase des Ofens erforderlich. Ist kein Bauteil im Ofen vorhanden, kann deshalb die NIR-Strahlungsquelle ausgeschaltet werden und damit Energie gespart werden.

Die Aufheizrate der Bauteile und damit die Zykluszeit, mit welcher Bauteile mit dem erfindungsgemäßen Verfahren gelötet werden können, kann erfindungsgemäß dadurch beschleunigt werden, dass die Bauteile zumindest teilweise eine hochtemperaturfeste Beschichtung aufweisen, welche im NIR-Wellenlängenbereich von 800 nm bis 1500 nm selektiv absorbiert. Durch diese Beschichtung wird der Anteil der vom Bauteil reflektierten elektromagnetischen Strahlung im NIR-Wellenbereich stark reduziert, so dass wesentlich mehr NIR-Strahlung absorbiert und damit mehr Energie vom Bauteil aufgenommen wird.

Da die NIR-Strahlungsquellen nicht nur elektromagnetische Strahlung im NIR-Wellenbereich erzeugen, sondern auch Abwärme, wird vorzugsweise die Abwärme mindestens einer NIR-Strahlungsquelle für ein zusätzliches konvektives Erwärmen des zu lötenden Bauteils genutzt. Durch die Verwendung der Kühlung der NIR-Strahlungsquelle oder NIR-Strahlungsquellen zum konvektiven Erwärmen der zu lötenden Bauteile, kann nicht nur der Energiebedarf für das Löten verringert werden, die Vorheizung führt auch zu einer Verringerung der Spannungen im Bauteil. Ferner wird die Aufheizphase zeitlich weiter verringert, da das Bauteil nicht von Raumtemperatur unter Verwendung der NIR-Strahlungsquellen auf sehr hohe Temperaturen, beispielsweise von 600°C erwärmt werden.

Die Verwendung von evakuierbaren Lötlehren zur Durchführung eines Vakuumlötens ist auch bei Benutzung der NIR-Strahlungsquellen vorteilhaft, denn die Lötlehren können besonders klein ausgeführt werden und benötigen für den Durchtritt der Strahlungsenergie lediglich in diesem Wellenlängenbereich transparente Wände.

Wird unter Verwendung mindestens eines Pyrometers die Temperatur der Bauteile im Erwärmungsbereich gemessen, besteht die Möglichkeit, das Lötverfahren besonders kontrolliert durchzuführen, da die NIR-Strahlungsquellen durch Regulierung ihrer Leistungsabgabe unmittelbar auf die Temperatur des Bauteils einwirken. Es besteht damit die Möglichkeit, besonders exakte Lötprofile einzuhalten und anzuwenden.

Gemäß einer weiteren Ausgestaltung des erfindungsgemäßen Verfahrens erfolgt die Erwärmung des Bauteils auf Löttemperatur in weniger als 10 Sekunden, vorzugsweise in 5 Sekunden oder weniger. Dies ermöglicht besonders hohe Taktraten, da beispielsweise der Lötprozess innerhalb weniger Minuten, oder in weniger als einer Minute, beendet werden kann. Die Prozesszeit ist damit um einen Faktor 5 bis 15 verringert.

Aufgrund der deutlichen Verbesserung der Prozesszeit und der Vielzahl von im inneren Bereich der Bauteile angeordneten Lötstellen ist es gemäß des erfindungsgemäßen Verfahrens vorteilhaft, wenn Wärmetauscher gelötet werden. Hier zeigt sich insbesondere die Effektivität der NIR-Strahlungsquellen in Verbindung mit der hohen Wärmeleitfähigkeit von Aluminium. Das Bauteil kann zumindest teilweise eine im NIR-Wellenlängenbereich von 800 nm bis 1500 nm selektiv absorbierende Beschichtung aufweisen, welche Löttemperaturen von etwa 600°C ohne Schaden übersteht. Diese Bauteile ermöglichen es in Verbindung mit dem erfindungsgemäßen Verfahren, deutlich kürzere Taktzeiten zu erzielen, da das Aufheizen der Bauteile auf Löttemperatur von etwa 600°C innerhalb weniger Sekunden abgeschlossen ist. Das Bauteil ist ein Wärmetauscher, da diese eine besonders hohe Anzahl an Lötstellen, welche im Inneren der Bauteile liegen, aufweisen, die mit dem erfindungsgemäßen Verfahren besonders effektiv gelötet werden können.

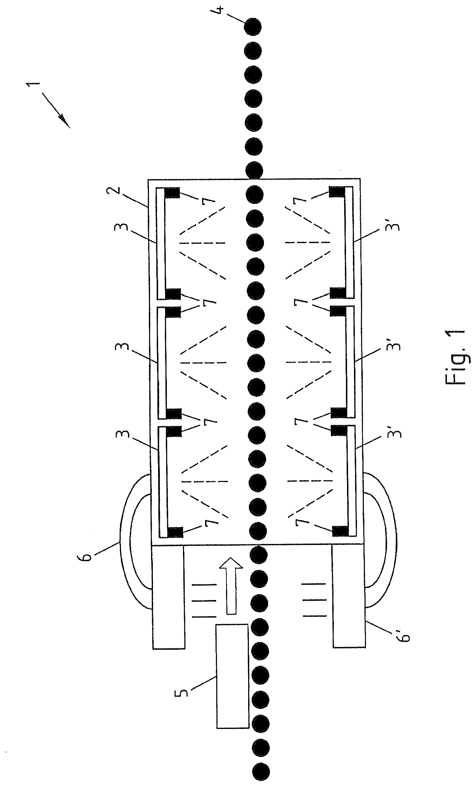

Es gibt nun eine Vielzahl von Möglichkeiten, das erfindungsgemäße Verfahren weiterzuentwickeln. Hierzu wird verwiesen einerseits auf die dem Patentanspruch 1 nachfolgenden Patentansprüche sowie auf die Beschreibung von Ausführungsbeispielen in Verbindung mit der Zeichnung. Die Zeichnung zeigt in
- Fig. 1: in einer schematischen Schnittansicht eine Vorrichtung zur Durchführung des erfindungsgemäßen Verfahrens in einer schematischen Seitenansicht,
- Fig. 2: in einer Schnittansicht ein Beispiel eines Absorbermoduls eines Solarkollektors, das nicht zur Erfindung gehört,
- Fig. 3: in einer perspektivischen Darstellung das Beispiel aus Fig. 2,
- Fig. 4: ein Ausführungsbeispiel eines erfindungsgemäßen Wärmetauschers in einer schematischen Schnittansicht und
- Fig. 5: in einem Diagramm das Lötprofil eines Ausführungsbeispiels des erfindungsgemäßen Lötverfahrens.

Die Vorrichtung 1 zur Durchführung des erfindungsgemäßen Verfahrens besteht aus einem NIR-Ofen 2 mit NIR-Strahlungsquellen 3 und 3' sowie Mitteln 4, welche zum Transport des zu lötenden Bauteils 5 verwendet werden. In dem NIR-Ofen sind die Strahlungsquellen 3 und 3' von beiden Seiten, d.h. oben und unten des Bauteils 5, angeordnet, so dass das Bauteil 5 beim Durchlauf durch den NIR-Ofen zweiseitig erwärmt wird. Schematisch dargestellt sind darüber hinaus Mittel 6 und 6', welche die Abwärme der Strahlungsquellen 3 und 3' nutzen, um konvektiv das Bauteil 5 vor Eintritt in den NIR-Ofen 2 vorzuwärmen. Das Bauteil 5 kann beispielsweise aber auch in einer Lötlehre, welche nicht dargestellt ist, angeordnet sein und mit dem NIR-Ofen beispielsweise vakuumgelötet werden. Wichtig ist dabei, dass die Fenster der Lötlehre transparent für Strahlung aus dem Wellenlängenbereich von 800 nm bis 1500nm sind.

Mit der Vorheizstrecke durch die Mittel 6, 6' wird das Bauteil bereits auf eine Temperatur deutlich oberhalb der Raumtemperatur erwärmt. Die Spannungen, die aufgrund des rapiden Temperaturanstiegs im NIR-Ofen 2 eingebracht werden, können damit reduziert werden. Nach Austritt aus dem NIR-Ofen 2 kühlt das Bauteil 5 ab, so dass die Lötstellen erkalten und erstarren. Die Geschwindigkeit, mit welcher das Bauteil 5 den NIR-Ofen 2 passiert, kann relativ groß sein, da bereits bei einer Aufheizphase von weniger als 10 Sekunden das Bauteil auf die Löttemperatur von etwa 600°C gebracht werden kann.

Pyrometer 7 können die Temperatur des Bauteils 5 berührungslos erfassen und damit die Strahlungsquellen und deren Energieeintrag in das Bauteil 5 steuern bzw. regeln. Der Lötprozess wird hierdurch besonders gut kontrollierbar.

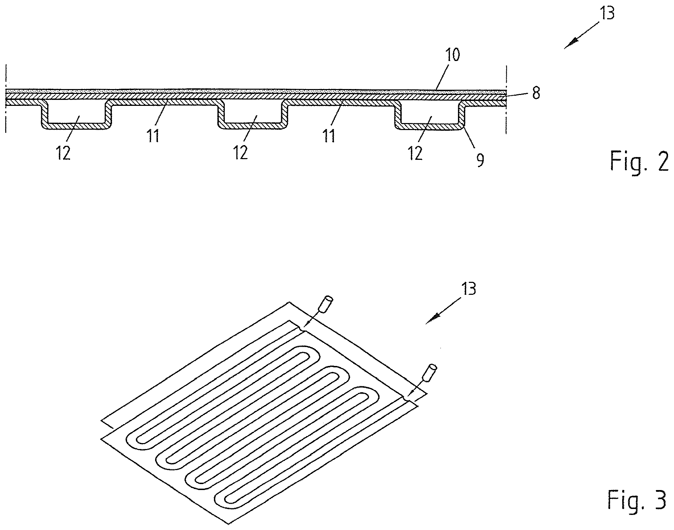

Fig. 2 zeigt in einer Schnittansicht einen Solarkollektor 13, der nicht zur Erfindung gehört, welcher aus zwei Aluminiumblechen 8 und 9 besteht, wobei das Aluminiumblech 8 zusätzlich eine Beschichtung 10 aufweist, welche selektiv im Wellenlängenbereich von 800 nm bis 1500 nm, also im NIR-Wellenlängenbereich, elektromagnetische Strahlung absorbiert. Die Aufheizphase kann hierdurch noch weiter reduziert werden, da das Bauteil 13 durch die verstärkte Absorption der NIR-Strahlung mehr Energie im NIR-Ofen 2 aufnehmen kann. Deutlich sichtbar im Schnitt der Fig. 2 sind die Lötstellen 11, welche innenliegend angeordnet sind und damit einer unmittelbaren Erwärmung von außen nicht zugänglich sind. Darüber hinaus erkennt man die Wärmemedien führenden Kanäle 12, welche zwischen den Lötverbindungen 11 angeordnet sind.

Fig. 3 zeigt ein Beispiel eines Solarkollektors 13, der nicht zur Erfindung gehört, in einer perspektivischen Ansicht. Deutlich zu erkennen ist, dass das Absorbermodul 13 eines Solarkollektors großflächige Lötstellen aufweist. Durch die Verwendung von NIR-Strahlungsquellen kann das Bauteil großflächig erhitzt und gleichmäßig auf Löttemperatur gebracht werden. Die Taktzeiten für die Lötung des Solarkollektors 13 sind aufgrund der vorgesehenen, selektiv im NIR-Wellenlängenbereich absorbierenden Beschichtung besonders kurz. Die Beschichtung muss selbstverständlich hochtemperaturfest sein, so dass sie die Löttemperaturen von etwa 600°C ohne Schaden übersteht.

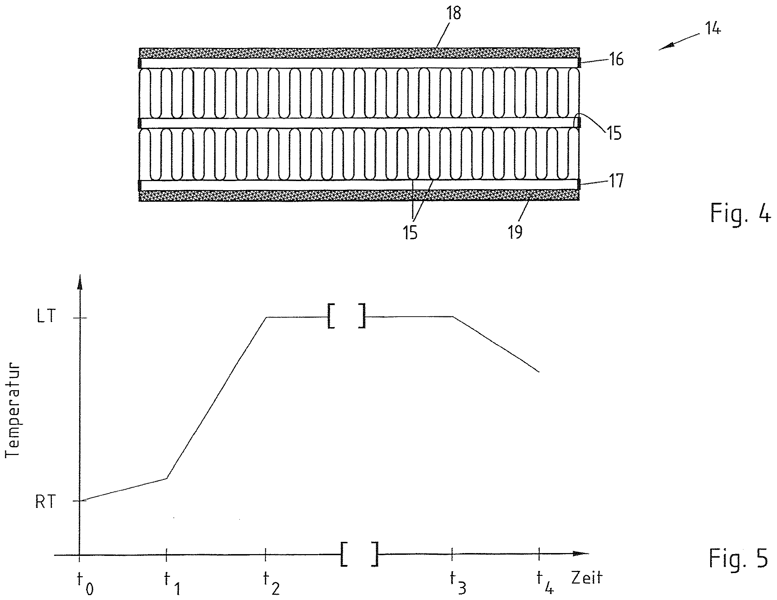

Auch ein Wärmetauscher, wie er in einer Seitenansicht in Fig. 4 dargestellt ist, weist eine Vielzahl an Lötstellen 15 auf und besteht aus einer Mehrzahl an Blechen und Folien. Die äußeren Bleche 16, 17 sind mit einer selektiv im NIR-Wellenlängenbereich absorbierenden Beschichtung 18 und 19 beschichtet, so dass beidseitig durch eine NIR-Strahlungsquelle der Wärmetauscher besonders effektiv erhitzt werden kann.

Schließlich zeigt Fig. 5 ein typisches Lötprofil in einem Zeit-Temperatur-Diagramm. RT ist die Raumtemperatur und LT die Löttemperatur. Die Löttemperatur beträgt üblicherweise in etwa 600°C und damit oberhalb der Solidustemperatur der üblicherweise verwendeten Aluminium-Silizium-Aluminium-Lote. Auf der Ordinate des Diagramms ist die Temperatur des Metallbauteils und auf der Abszisse ist die Zeit aufgetragen. Das Bauteil hat zunächst Raumtemperatur RT und wird durch die Mittel 6 bzw. 6' bis zum Zeitpunkt t₁ vorgewärmt. Zum Zeitpunkt t₁ tritt das Bauteil 5 in den NIR-Ofen 2 ein und wird innerhalb weniger Sekunden bis zum Zeitpunkt t₂ auf Löttemperatur etwa 600°C erwärmt. Das Bauteil wird für eine bestimmte Zeit auf Löttemperatur gehalten, beispielsweise für 30 Sekunden. Anschließend kühlt das Bauteil nach Austritt aus dem NIR-Ofen 2 vom Zeitpunkt t₃ an ab. Ab dem Zeitpunkt t₄ ist die Bauteiltemperatur schon deutlich geringer als die Solidustemperatur des Aluminiumlots, so dass die Lötstellen erkalten und verfestigen.

Damit ist der Lötprozess bereits beendet, und die Lötstellen können nun auskühlen und erstarren. Aufgrund der deutlich kürzeren Zykluszeiten sind enorme Verbesserungen im Bereich der Produktivität und Wirtschaftlichkeit bei der Herstellung entsprechender Bauteile realisierbar.

## Patentansprüche

1. Verfahren zum Löten von Wärmetauschern, welche zumindest teilweise aus Aluminium oder einer Aluminiumlegierung bestehen,
wobei die Wärmetauscher unter Verwendung mindestens einer Nah-Infrarot (NIR)-Strahlungsquelle (3, 3') auf Löttemperatur erwärmt werden, wobei die NIR-Strahlungsquelle im Wellenlängenbereich von 800 nm bis 1500 nm ihr Intensitätsmaximum besitzt, **dadurch gekennzeichnet, dass** die Wärmetauscher unter Verwendung mindestens einer NIR-Strahlungsquelle vakuumgelötet werden.

2. Verfahren nach Anspruch 1,
**dadurch gekennzeichnet, dass** mindestens eine im Inneren der Bauteile angeordnete Lötstelle gelötet wird.

3. Verfahren nach einem der Ansprüche 1 oder 2,
**dadurch gekennzeichnet, dass**
die Wärmetauscher ein- oder mehrseitig unter Verwendung mindestens einer NIR-Strahlungsquelle erwärmt werden.

4. Verfahren nach einem der Ansprüche 1 bis 3,
**dadurch gekennzeichnet, dass**
die NIR-Strahlungsquelle nur zur Erwärmung des zu lötenden Wärmetauschers eingeschaltet ist.

5. Verfahren nach einem der Ansprüche 1 bis 4,
**dadurch gekennzeichnet, dass**
evakuierbare Lötlehren zur Durchführung des Vakuumlötens verwendet werden.

6. Verfahren nach einem der Ansprüche 1 bis 5,
**dadurch gekennzeichnet, dass**
unter Verwendung mindestens eines Pyrometers die Temperatur der Wärmetauscher im Erwärmungsbereich gemessen wird.

## Claims

1. Method for soldering heat exchangers which at least partly consist of aluminium or an aluminium alloy, wherein the heat exchangers are heated to the soldering temperature using at least one near-infrared (NIR) radiation source (3, 3'),
wherein the NIR radiation source has its intensity maximum in the wavelength range of 800 nm to 1500 nm, **characterised in that** the heat exchangers are vacuum-soldered using at least one NIR radiation source.

2. Method according to Claim 1,
**characterised in that** at least one soldering point arranged in the interior of the components is soldered.

3. Method according to Claim 1 to 2,
**characterised in that** the heat exchangers are heated on one or more sides using at least one NIR radiation source.

4. Method according to any one of Claims 1 to 3,
**characterised in that** the NIR radiation source is only switched on for heating the heat exchanger to be soldered.

5. Method according to any one of Claims 1 to 4,
**characterised in that** evacuable soldering jigs are used to perform the vacuum soldering.

6. Method according to any one of Claims 1 to 5,
**characterised in that** the temperature of the heat exchangers in the heating region is measured using at least one pyrometer.

## Revendications

1. Procédé de brasage d'échangeurs de chaleur, lesquels se composent au moins partiellement d'aluminium ou d'un alliage d'aluminium, auquel cas les échangeurs de chaleur sont chauffés à une température de brasage en utilisant au moins une source de rayonnement proche-infrarouge (NIR) (3, 3'),
auquel cas la source de rayonnement NIR atteint son maximum d'intensité dans une plage de longueur d'onde allant de 800 nm à 1 500 nm, **caractérisé en ce que** les échangeurs de chaleur sont brasés sous vide en utilisant au moins une source de rayonnement NIR.

2. Procédé selon la revendication 1,
**caractérisé en ce qu'**au moins un point de brasage agencé à l'intérieur des composants est brasé.

3. Procédé selon l'une des revendications 1 ou 2,
**caractérisé en ce que** les échangeurs de chaleur sont chauffés d'un côté ou de plusieurs côtés en utilisant au moins une source de rayonnement NIR.

4. Procédé selon une des revendications de 1 à 3,
**caractérisé en ce que** la source de rayonnement NIR est activée uniquement pour le réchauffement des échangeurs de chaleur à braser.

5. Procédé selon une des revendications de 1 à 4,
**caractérisé en ce que** des gabarits de brasage pouvant être mis sous vide sont utilisés pour la réalisation du brasage sous vide.

6. Procédé selon une des revendications de 1 à 5,
**caractérisé en ce que** la température des échangeurs de chaleur est mesurée dans la zone d'échauffement en utilisant au moins un pyromètre.
